Europäisches Patentamt

European Patent Office

Office européen des brevets

(19)

(11) Veröffentlichungsnummer: **0 387 918**
**A2**

## (12) EUROPÄISCHE PATENTANMELDUNG

(21) Anmeldenummer: **90105807.3**

(22) Anmeldetag: **15.01.88**

(51) Int. Cl.⁵: **F16K 25/02, F16K 1/44**

(30) Priorität: **16.01.87 DE 3701027**

(43) Veröffentlichungstag der Anmeldung:
**19.09.90 Patentblatt 90/38**

(60) Veröffentlichungsnummer der früheren
Anmeldung nach Art. 76 EPÜ: **0 279 177**

(84) Benannte Vertragsstaaten:
**AT BE CH DE ES FR GB IT LI LU NL SE**

(71) Anmelder: **Mieth, Hans Otto, Dipl.-Ing.**
**Sandkrug 3**
**D-2058 Schnakenbek(DE)**

(72) Erfinder: **Mieth, Hans Otto, Dipl.-Ing.**
**Sandkrug 3**
**D-2058 Schnakenbek(DE)**

(74) Vertreter: **Glaeser, Joachim, Dipl.-Ing. et al**
**Patentanwalt Königstrasse 28**
**D-2000 Hamburg 50(DE)**

(54) **Verfahren und Vorrichtung zur Reinigung einer dynamisch beanspruchten Dichtungsanordnung eines Ventils.**

(57) Die Erfindung betrifft ein Verfahren zur Reinigung einer dynamisch beanspruchten Dichtungsanordnung eines Ventils und eine Vorrichtung zu seiner Durchführung, wobei jede Dichtungsanordnung über zwei voneinander getrennte Dichtungen in serieller Anordnung zwei Räume gegeneinander abdichtet, zwischen oder in denen ein Ventilteil bewegbar angeordnet ist, das mit seiner Mantelfläche mit den Dichtungen zusammenwirkt und dabei das Überströmen von Fluiden von einem Raum zum andern verhindert, wobei zwischen den Dichtungen ein das Ventilteil umschließender Ringraum vorgesehen ist, der außenseits von einem Gehäuse des Ventils begrenzt wird und der über mindestens jeweils eine Anschluß- und einer Ablauföffnung mit der Umgebung des Ventils verbunden ist.

Durch die Erfindung wird unter anderem sichergestellt, daß auch jene kritischen Bereiche der Nuten für die Dichtungen, die nur schwer zu erfassen sind, vom Reingungsmittel zuverlässig beaufschlagt werden.

Dies wird unter anderem verfahrenstechnisch dadurch erreicht, daß die mit dem abzudichtenden Fluid in Berührung kommende Dichtung, bis auf ihre an den Abdichtungsstellen temporär gegebenen Kontaktflächen mit dem Ventilteil einerseits und dem Gehäuse andererseits, aus den Räumen beiderseits der Kontaktflächen mit Reinigungsflüssigkeit bespült wird.

Die Vorrichtung zur Durchführung des Verfahrens zeichnet sich unter anderem dadurch aus, daß jede Dichtung (70, 71) jeweils auf ihrer dem abzudichtenden Raum innerhalb des Ventilgehäuseteils (1 bzw. 2) zugewandten Seite von einer flüssigkeitsdurchlässigen Begrenzungswand (41) berandet wird, und daß jede der Dichtungen in Richtung der Bewegung des Ventilteils (4) eine begrenzte Beweglichkeit aufweist.

Fig.2

# Verfahren und Vorrichtung zur Reinigung einer dynamisch beanspruchten Dichtungsanordnung eines Ventils

Die Erfindung betrifft ein Verfahren zur Reinigung einer dynamisch beanspruchten Dichtungsanordnung eines Ventils nach dem Oberbegriff des Anspruchs 1 und eine Vorrichtung zur Durchführung des Verfahrens.

Ein Ventil der einleitend gekennzeichneten Gattung ist beispielsweise aus der DE-OS 35 16 128 bekannt. Dieses Ventil weist an den Abdichtungsstellen des schieberartig ausgebildeten Schließgliedes Dichtungen von kreisförmigem Querschnitt auf, deren Nuten, in die sie eingebettet sind, reinigungstechnisch schwierig zu erfassen sind. Die in der vorgenannten Druckschrift erwähnte Kammer zwischen zwei Dichtungen, die mit Reinigungsflüssigkeit beaufschlagbar ist, kann zur Reinigung der Nuten der Dichtungen keinen wirksamen Beitrag leisten, da die Reinigungsflüssigkeit beim Spülvorgang der erwähnten Kammer nicht in die Bereiche der Nuten hinter den Dichtungen gelangen kann. Durch eine derartige Maßnahme kann lediglich, wie in der Druckschrift ausgeführt ist, verhindert werden, daß beispielsweise der nach außen tretende Teil des Ventilskörpers infiziert wird und mit der zu transportierenden Flüssigkeit in Berührung gelangt.

Es ist es Ziel der vorliegenden Erfindung, die dynamisch beanspruchte Dichtungsanordnung des Ventils der einleitend gekennzeichneten Gattung und insbesondere eines Ventils, bei dem die Abdichtungsstellen durch Dichtungen vorzugsweise mit kreisförmigem Querschnitt gebildet werden, einer Reinigung zu unterziehen, wodurch auch jene Bereiche in den Nuten für die Dichtungen, die bei bekannten Anordnungen nur schwer zu erfassen sind, vom Reinigungsmittel zuverlässig beaufschlagt werden.

Dieses Ziel wird verfahrenstechnisch durch Anwendung der Kennzeichenmerkmale des Anspruchs 1 erreicht. Eine vorteilhafte Ausgestaltung des Verfahrens gemäß der Erfindung ist Gegenstand des Anspruchs 2. Eine Vorrichtung zur Durchführung des Verfahrens ist durch die Kennzeichenmerkmale des Anspruchs 3 gegeben. Vorteilhafte Ausführungsformen der Vorrichtung sind Gegenstand der abhängigen Patentansprüche 4 bis 13.

Die vorstehend vorgeschlagene Ausführungsform der Vorrichtung zur Reinigung seiner dynamisch beanspruchten Dichtungsanordnung eröffnet eine Reihe von vorteilhaften Lösungen, die einerseits den Einsatz einfacher Dichtungen mit kreisförmigem Querschnitt, der bislang mechanisch bedenklich und reinigungstechnisch problematisch war, in vorteilhafter Weise erst möglich macht und andererseits den Dichtungsbereich vereinfacht und wartungsfreundlich gestaltet.

Eine vollständige Reinigung von Dichtungen mit vorzugsweise kreisförmigem Querschnitt wird durch die vorgeschlagene Ausführungsform der Vorrichtung sichergestellt. Bei Anwendung dieser Ausführungsform wird nicht nur der ventilgehäuseseitige Teil der Dichtungen im Bereich zwischen den Abdichtungsstellen, sondern auch der jeweils andersseitige Bereich einwandfrei gereinigt. Die vollständige Bespülung der Dichtung mit Reinigungsflüssigkeit bis auf ihre an den Abdichtungsstellen temporär gegebenen Kontaktflächen mit dem Ventilteil einerseits und dem Gehäuse andererseits wird unter anderem dadurch erreicht, daß jede Dichtung auf ihrer dem abzudichtenden Raum zugewandten Seite von einer flüssigkeitsdurchlässigen Begrenzungswand berandet wird, und daß jede der Dichtungen in Richtung der Schaltbewegung des Ventils eine begrenzte Beweglichkeit aufweist. Um auch Reinigungsflüssigkeit an die temporär gegeben Kontaktflachen der Dichtung heranführen zu können, ist erfindungsgemäß sichergestellt, daß als Folge der Schaltbewegung des Ventils die Bildung einer anderen Kontaktfläche der Dichtung an derselben Abdichtungsstelle oder dieselbe oder eine andere Kontaktfläche an einer anderen Abdichtungsstelle zugelassen wird. Dies wird, entgegen der üblichen Anordnung derartiger Dichtungen in engbemessenen Nuten, durch eine jeweils großzügig bemessene Nut, in der die Dichtung sich mit axialem Spiel bewegen kann, errreicht.

Durch die Anordnung einer Scheibe, die mit einer Trennwand in einen Ringraum zwischen den Dichtungen hineingreift, und die derart an ihren mit den Dichtungen in Berührung kommenden Flächen ausgebildet ist, daß in jeder beliebigen Dichtungslage ein Durchtritt von Reinigungsflüssigkeit zwischen der Dichtung und der Trennwand sichergestellt ist, kann der Bereich zwischen den Dichtungen, der außenseits von den Dichtungen selbst unmittelbar begrenzt wird, einwandfrei im Zwangsdurchlauf gereinigt werden. Die Räume beiderseits der Trennwand verfügen jeweils über eine Verbindung zur Umgebung des Ventils, und Ihre Durchtrittsquerschnitte sind zweckmäßig so dimensioniert, daß der Raum, welcher die Leckage und die Reinigungsflüssigkeit ableitet, größer als jener ausgebildet ist, über den die Reinigungsflüssigkeit in den Bereich zwischen den Dichtungen zugeführt wird.

Bei Verwendung der vorgenannten Scheibe zum Zwecke der gezielten Zuführung und Ableitung der Reinigungsflüssigkeit ist die zwischen den Ventilgehäuseteilen notwendige Gehäusedichtung am äußeren Umfang der Scheibe angeordnet. An dieser Stelle läßt sie sich bei zusammengebautem Ventil im Falle eines Defektes nicht austauschen. Daher sieht eine andere Ausführungsform der Vorrichtung gemäß der Erfindung vor, die notwendige Gehäusedichtung in unmittelbarer Nähe der Dichtungen anzuordnen, so daß sie über den Innenraum der Ventilgehäuseteile ausgetauscht werden kann. Zu diesem Zweck ist weiterhin ein Haltering vorgesehen, der einerseits die Gehäusedichtung ventilteilseitig stützt und andererseits zwischen sich und dem Ventilteil einen Durchtrittsspalt freiläßt, wodurch die durch den Haltering gebildeten Teilräume des Ringraumes zwischen den Dichtungen miteinander verbunden sind, und daß die Teilräume des Ringraumes innerhalb des jeweils zugeordneten Ventilgehäuseteils mit einer Anschlußöffnung bzw. Ablauföffnung verbunden sind. Diese Lösung erlaubt den Austausch der Gehäusedichtung auf sehr einfache Weise dadurch, daß nach Entfernung einer Dichtung der Haltering so weit in den Aufnahmebereich dieser Dichtung axial verschoben werden kann, daß die Gehäusedichtung zum Innenraum der Ventilgehäuseteile freigelegt und damit von diesem aus zugänglich wird. Der Haltering ist zweckmäßig so ausgebildet, daß er zwar radiale Stützkräfte auf die Gehäusedichtung ausüben kann, in axialer Richtung jedoch in beiden Richtungen bis zur Anlage an der jeweiligen Dichtung frei beweglich ist. Dadurch kann sich bei Druckbeaufschlagung der Innenräume des Ventils die jeweils betroffene Dichtung so weit in Richtung des Halteringes verschieben, bis sie an diesem zur Anlage kommt und diesen gegebenenfalls bis zu dessen Anlage an der anderen Dichtung axial verschiebt. Die Stützwirkung des Halteringes im Bezug auf die Gehäusedichtung geht durch seine erfindungsgemäß begrenzte axiale Beweglichkeit nicht verloren.

Falls die Dichtung, wie dies eine weitere vorteilhafte Ausführungsform der Vorrichtung gemäß der Erfindung vorsieht, derart in sich um 360 Grad verdreht ausgebildet ist, daß alle denkbaren, die Torusachse der Dichtung umschließenden Fasern gleichlang sind, wird ein längsdehnungsneutrales Verdrehen der Dichtung in sich ohne rückstellende Momente infolge Dichtungselastizität möglich. Dadurch werden als Folge der Schaltbewegung des Schließgliedes bzw. der Stange ständig wechselnde Kontaktstellen an der Dichtung geschaffen, wodurch die mit der Erfindung angestrebte sichere und einwandfreie Reinigung ansich kritischer Dichtungsbereiche zusätzlich gefördert wird.

Ausführungsbeispiele der Erfindung sind in der Zeichnung dargestellt und werden im folgenden näher erläutert.

Es zeigen:

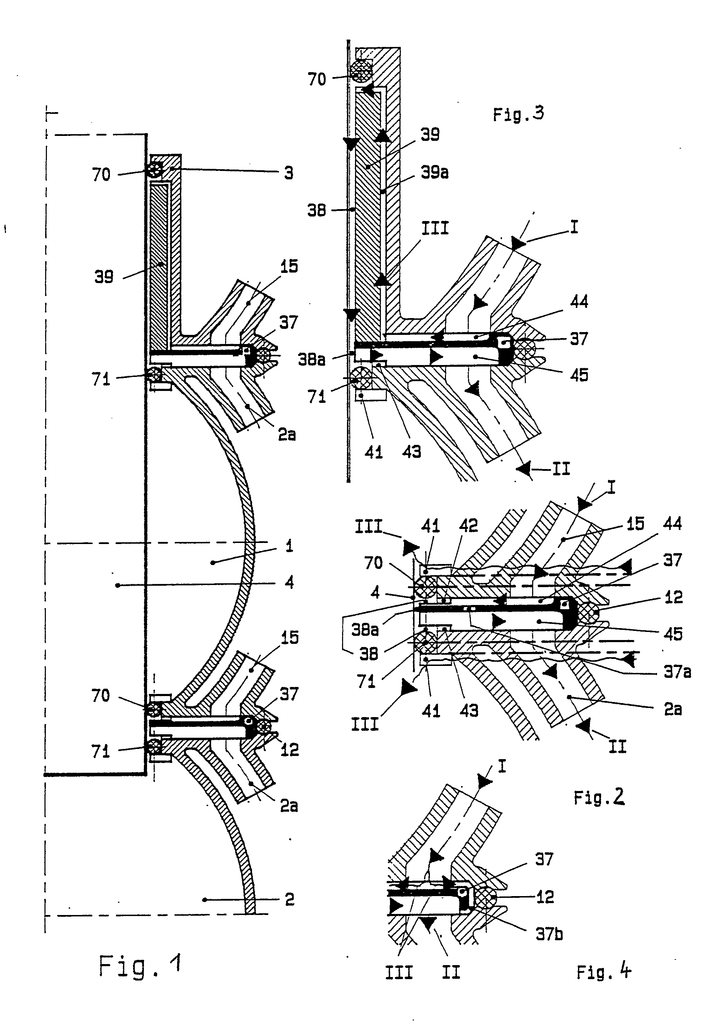

Figuren 1 bis 4 einen Mittelschnitt durch eine vorteilhafte Ausführungsform der Vorrichtung zur Reinigung seiner dynamisch beanspruchten Dichtungsanordnung (Figur 1), wobei die infrage kommenden Bereiche in den Figuren 2 bis 4 vergrößert dargestellt sind und

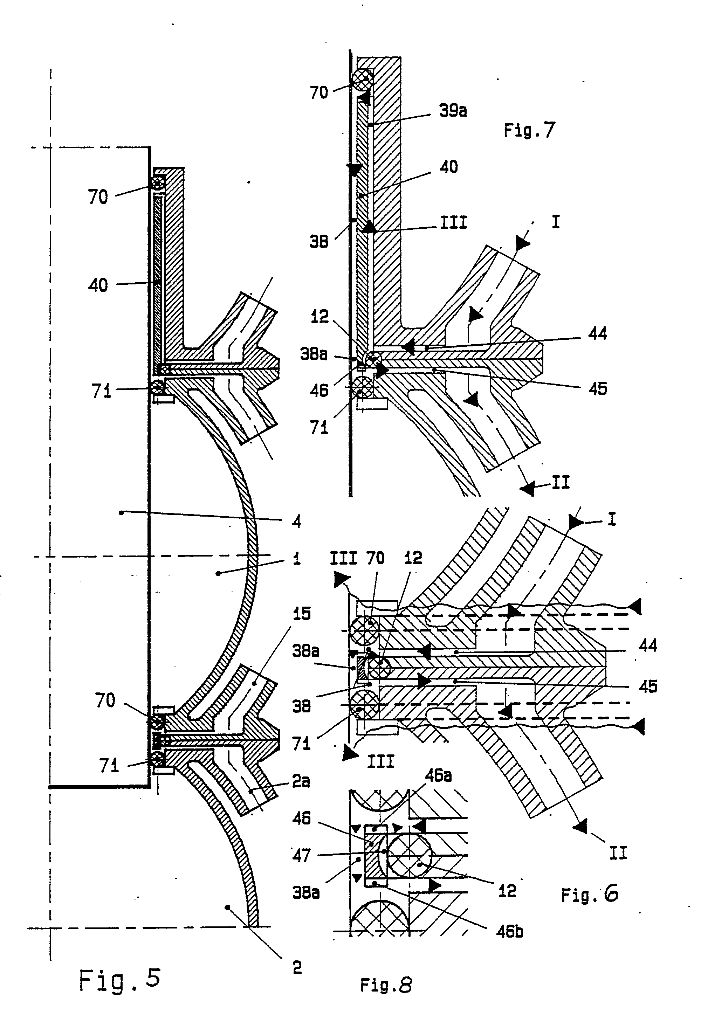

Figuren 5 bis 8 einen Mittelschnitt durch eine andere vorteilhafte Ausführungform der Vorrichtung zur Reinigung seiner dynamisch beanspruchten Dichtungsanordnung (Figur 5) wobei die Gehäusedichtung vom Innenraum des Ventils zugänglich und austauschbar ist und wobei Einzelheiten der Anordnung in den Figuen 6 bis 8 vergrößert dargestellt sind.

In der nachfolgend angegebenen Liste sind die in der folgenden Beschreibung der Figuren 1 bis 8 verwendeten Bezeichnungen aufgeführt.

In Figur 1 sind zwei Dichtungsbereiche eines Ventils dargestellt. Im unteren Teil handelt es sich um den Dichtungsbereich des Schließgliedes 4 im Zusammenwirken mit den Dichtungen 70 und 71, die seriell angeordnet sind und die Innenräume der Ventilgehäuseteile 1 und 2 gegeneinander abdichten. Das Schließglied 4 befindet sich in der gezeigten Darstellung in seiner Schließstellung, wodurch das Überströmen von Fluiden von einem Ventilgehäuseteil 1 bzw. 2 in das jeweils andere verhindert wird. In seinem oberen Bereich zeigt Figur 1 eine Dichtungsanordnung im Bereich einer Stangendurchführung, wobei die Dichtungen 70 und 71, im Gegensatz zur Dichtungsanordnung im Bereich des Schließgliedes, einen relativ großen Abstand voneinander haben. Während die Dichtung 71 dort analog zu den Dichtungen 70 und 71 im Bereich des Schließgliedes 4 angeordnet ist und einen Ringraum 38 gegenüber dem Innenraum des Ventilgehäuseteils 1 abdichtet, ist die Dichtung 70 in einem Gehäuseverschlußteil 3 angeordnet und trennt den vorgenannten Ringraum 38 gegenüber der Umgebung des Ventils oder gegenüber einem anderen Raum. Zwischen den Ventilgehäuseteilen 1 und 2 bzw. dem Ventilgehäuseteil 1 und dem Gehäuseverschlußteil 3 findet jeweils eine das Schließglied 4 konzentrisch umschließende Scheibe 37 form- und kraftschlüssig Aufnahme, die in einen Ringraum 38 zwischen den Dichtungen 70, 71 eingreift (vergl. auch die vergrößerte Darstellung dieses Bereiches in den Figuren 2 und 3) und mit einer im Bereich der Verbindungsebene der Ventilgehäuseteile 1 und 2 bzw. 1 und 3 angeordneten Trennwand 37a einerseits in Verbindung mit dem Ventilgehäuseteil 1 oder 3 einen ersten Ringraum 44 und mit dem Ventilgehäuseteil bzw. 1 andererseits einen zweiten Ringraum 45 bildet. Die Trennwand 37a läßt zwischen sich und dem Schließglied 4 einen Durchtrittsspalt 38a frei für die Verbindung der Ringräume 44 und 45 miteinander. Die Scheibe 37 ist außenseits gegen die sie begrenzenden Ventilgehäuseteile 1 und 2 bzw. 1 und 3 über eine Gehäusedichtung 12 abgedichtet. Der erste Ringraum 44 ist über eine Anschlußöffnung 15 und der zweite Ringraum 45 ist über eine Ablauföffnung 2a mit der Umgebung des Ventils verbunden. Zwischen den Dichtungen 70, 71 des oberen Dichtungsbereiches, die einen relativ großen Abstand voneinander haben, ist im mit der Anschlußöffnung 15 verbundenen Teil des Ringraumes 38 ein Umlenkteil 39 vorgesehen, welches einerseits zwischen sich und dem Gehäuseverschlußteil 3 einen Kanal 39a bilden, welcher vom ersten Ringraum 44 zur Dichtung 70 führt und andererseits zwischen sich und dem Ventilteil 4 eine Verbindung von der Dichtung 70 zum Durchtrittsspalt 38a herstellt. Das Umlenkteil 39 kann an der Trennwand 37a stoffschlüssig angeordnet oder angeformt sein.

Aus der vergrößerten Darstellung der Figuren 2 und 3 erkennt man insbesondere die nachfolgend dargestellten vorteilhaften Einzelheiten. Die Dichtungen 70 und 71 (vergl. Figur 2) und die Dichtung 71 (vergl. Figur 3) sind jeweils auf ihrer dem abzudichtenden Innenraum des Ventilgehäuseteils 1 bzw. 2 zugewandten Seite von einer flüssigkeitsdurchlässigen Begrenzungswand 41 berandet. Zwischen der Dichtung 70 bzw. 71 und der Scheibe 37 ist jeweils ein axiales Spiel vorgesehen, so daß sich die jeweilige Dichtung entweder als Folge der Bewegung des Schließgliedes 4 oder infolge von Druckkräften aus dem Innenraum der Ventilgehäuseteile 1 bzw. 2, in axialer Richtung gesehen, begrenzt verschieben kann. Bei Anlage der Dichtung 70 bzw. 71 an der Scheibe 37 ist jedoch in jedem Falle sichergestellt, daß zwischen den Ringräumen 44 und 45 beiderseits der Trennwand 37a über den Durchtrittsspalt 38a eine durchgängige Verbindung besteht. Über einen ersten und einen zweiten Rezeß 42 bzw. 43, angeordnet am Ventilgehäuseteil 1 bzw. 2, lassen sich letztere zueinander über die Scheibe 37 zentrieren. Die Trennwand 37a ist zweck mäßigerweise innerhalb der Scheibe 37 asymmetrisch angeordnet, so daß der Durchtrittsquerschnitt des zweiten Ringraumes 45 größer als jener des ersten Ringraumes 44 ist.

Mit I ist der Eintritt der Reinigungsflüssigkeit in die Anschlußöffnung 15 bezeichnet. Bei einer Reinigung des Dichtungsbereichs im Bereich des Ventilsitzes (vergl. Figur 2) gelangt die Reinigungsflüssigkeit über den ersten Ringraum 44 in den zwischen der Dichtung 70 und der Trennwand 37a gebildeten Teilraum des Ringraumes 38. Sie kann dort die Dichtung 70 bis auf ihre Kontaktflächen einerseits mit dem Ventilgehäusteil 1 und andererseits mit dem Schließglied 4 bespülen. Über den Durchtrittsspalt 38a gelangt sie auf die andere Seite der Trennwand 37a, um hier in gleicher Weise die Dichtung 71 zu beschwallen. Die Reinigungsflüssigkeit verläßt über den zweiten Ringraum 45 und die Ablauföffnung 2a das Ventilgehäuseteil 2, wobei der Austritt der Reinigungsflüssigkeit mit II bezeichnet ist. Durch die unterschiedliche Bemessung der Ringräume 44 und 45, wie vorstehend erläutern, wird ein Druckaufbau im Bereich des Ringraumes 38 verhindert. Die Reinigung der Dichtung 70 bzw. 71 auf ihrer dem abzudichtenden Innenraum der Ventilgehäuseteile 1 bzw. 2 zugewandten Seite erfolgt über einen Reinigungsflüssigkeitsstrahl III, der die Begrenzungswand 41 durchdringen und somit die Dichtung von dieser Seite her bespülen kann. Zur Reinigung der Gehäusedichtung 12 im Bereich der Scheibe 37 ist zweckmäßigerweise ein erster Bypasskanal 37b vorgesehen (vergl. Figur 4), der die Ringräume 44 und 45 miteinander verbindet und die Dichtung 12 tangiert. Bei der Anordnung eines derartigen ersten Bypasskanales 37b verzweigt sich die über den Eintritt I eintretende Reinigungsflüssigkeit in zwei unterschiedlich große Teilströme, in Figur 4 mit III gekennzeichnet, wobei der größere Teil in den Ringraum 38 zwischen die Dichtungen 70 und 71 gelangt. Eine gegebenenfalls an den Dichtungen 70 bzw. 71 auftretende Leckage wird zweckmäßigerweise über den zweiten Ringraum 45, der mit dem größeren Durchtrittsquerschnitt ausgestattet ist, und die Ablaufleitung 2a abgeführt.

Der Aufbau der Scheibe 37 im Bereich der Stangendichtung 70, 71 (vergl. Figur 3) ist identisch mit jenem der Scheibe 37 gemäß Figur 2 bzw. 4. Der einzige Unterschied besteht darin, daß die über den ersten Ringraum 44 geführte Reinigungsflüssigkeit über den Kanal 39 an die Dichtung 70 herangeführt wird, um von dort, geführt über das erste Umlenkteil 39 , nach Durchtritt durch den Durchtrittsspalt 38a an die Dichtung 71 zu gelangen. Die Abführung der Reinigungsflüssigkeit bzw. der Leckage erfolgt in gleicher Weise wie bei der Anordnung gemäß Figur 2.

In den Figuren 5 bis 8 ist eine andere Ausführungsform einer Vorrichtung zur Reinigung einer dynamisch beanspruchten Dichtungsansordnung eines Ventils gezeigt, wobei der wesentliche Unterschied zur Ausführungsform gemäß den Figuren 1 bis 4 darin besteht, daß die Begrenzungsflächen der Ventilgehäuseteile 1 und 2 bzw. 1 und 3 in der gemeinsamen Verbindungsebene liegen, in den Ringraum 38 bis nahe an die Dichtungen 70 und 71 herangeführt und dort über die Gehäusedichtung 12 gegeneinander angedichtet sind. Die die Ringräume 44 und 45 voneinander trennende Trennwand 37a der Scheibe 37 nach der Ausführungsform gemäß Figur 1 wird nunmehr durch nicht näher bezeichnete, an den Ventilgehäuseteilen 1 und 2 bzw. an dem Gehäuseverschlußteil 3 stoffschlüssig angeordnete oder angeformte Trennwände ersetzt. Die Gehäusedichtung 12 kann dadurch in den unmittelbaren Bereich der Dichtungen 70 und 71 verlagert werden. Ein Haltering 46 stützt einerseits die Gehäusedichtung 12 ventilteilseitig und bildet andererseits zwischen sich und dem Ventilteil 4 den Durchtrittsspalt 38a. Auf der den Dichtungen 70 bzw. 71 zugewandten Seite des Halteringes 46 ist jeweils ein flüssigkeitsdurchlässiger erster bzw. zweiter Abstandhalter 46a bzw. 46b angeordnet, der bei Kontakt mit der jeweils benachbarten Dichtung 70 bzw. 71 einen Durchtrittsquerschnitt zwischen dem Haltering 46 und der jeweiligen Dichtung sicherstellt. Zwischen dem Haltering 46 und der Gehäusedichtung 12 kann zur Intensivierung der Reinigungswirkung ein zweiter Bypasskanal 47 innerhalb des Halteringes 46 angeordnet werden, der die Teilräume des Ringraumes 38 miteinander verbindet (vergl. insbesondere die vergrößerte Darstellung gemäß Figur 8). Im Bereich der Stangendichtung (vergl. Figur 7) ist der Haltering 46 an einem zweiten Umlenkteil 40 stoffschlüssig angeordnet oder angeformt.

Der übrige Aufbau der Dichtungsanordnung gemäß den Figuren 5 bis 8, wobei die Figuren 6 bis 8 wesentliche Teile der Ausführungsform in vergrößerter Darstellung zeigen, ist identisch mit jenem gemäß Fig. 1. Für gleiche oder ähnliche Bauteile mit gleicher und ähnlicher Funktion wurden gleiche Bezeichnungen gewählt. Eine weitergehende Beschreibung der Ausführungsform erübrigt sich daher.

Falls in den Innenräumen der Ventilgehäuseteile 1 bzw. 2 Fluid unter Druck ansteht, wird gegebenenfalls die infrage kommende Dichtung 70 bzw. 71 in Richtung des Ringraumes 38 verschoben. Sie wird nach Überwindung des vorgesehenen axialen Spieles zwischen sich und dem Haltering 46 an letzterem zur Anlage kommen und diesen u. U. in Richtung der anderen Dichtung verschieben, bis auch eine Anlage an dieser Dichtung gegeben ist. Nunmehr stützt sich die eine Dichtung über den Haltering 46 an der anderen Dichtung ab, wobei, wie vorstehend bereits erwähnt, durch die Abstandhalter 46a bzw. 46b ein Durchtritt zwischen den Ringraumen 44 bzw. 45 und dem Durchtrittsspalt 38a in jedem Falle sichergestellt ist. Die Verschiebung des Halteringes 46 bewirkt weiterhin, daß stets eine andere Kontaktfläche an der Gehäusedichtung 12 zur Anlage kommt und somit günstige reinigungstechnische Voraussetzungen in diesem Bereich vorliegen. Die gleichen günstigen reinigungstechnischen Voraussetzungen werden, wie einleitend bereits dargestellt, im Hinblick auf die Kontaktflächen der Dichtungen 70 und 71 durch deren axiale Beweglichkeit geschaffen.

Falls die Dichtungen 70 bzw. 71, wie dies erfindungsgemäß vorgeschlagen wird, derart in sich um 360 Grad verdreht ausgebildet ist, daß alle denkbaren, die Torusachse der Dichtung umschließende Fasern gleichlang sind, wird infolge der Bewegung des Ventilteiles 4 eine Verschiebung und/oder eine Verdrehung der Dichtung ansich begünstigt. Dadurch erreicht man die reinigungstechnisch günstige Situation, daß als Folge der Schaltbewegung des Ventils die Bildung einer stets wechselnden anderen Kontaktfläche der Dichtung 70 bzw. 71 an derselben Abdichtungsstelle 8 bzw. 9 oder dieselbe oder eine andere Kontaktfläche an einer anderen Abdichtungsstelle zugelassen und auch erreicht wird.

Liste der Bezeichnungen

    1.2 Ventilgehäuseteile
    2a Ablauföffnung
    3 Gehäuseverschlußteil
    4 Schließglied
    12 Gehäusedichtung
    15 Anschlußöffnung
    37 Scheibe
    37a Trennwand
    37b erster Bypasskanal
    38 Ringraum
    38a Durchtrittsspalt
    39 erstes Umlenkteil
    39a Kanal
    40 zweits Umlenkteil
    41 Begrenzungswand
    42 erster Rezeß
    43 zweiter Rezeß
    44 erster Ringraum
    45 zweiter Ringraum
    46 Haltering
    46a erster Abstandhalter
    46b zweiter Abstandhalter
    47 zweiter Bypasskanal
    70 erste Dichtung
    71 zweite Dichtung
    I Eintritt der Reinigungsflüssigkeit
    II Austritt der Reinigungsflüssigkeit/Leckage
    III Reinigungsflüssigkeitsstrahl

**Ansprüche**

1. Verfahren zur Reinigung einer dynamisch beanspruchten Dichtungsanordnung eines Ventils, wobei jede Dichtungsanordnung über zwei voneinander getrennte Dichtungen in serieller Anordnung zwei Räume gegeneinander abdichtet, zwischen oder in denen ein Ventilteil bewegbar angeordnet ist, das mit seiner Mantelfläche mit den Dichtungen zusammenwirkt und dabei das Überströmen von Fluiden von einem Raum zum anderen verhindert, wobei zwischen den Dichtungen ein das Ventilteil umschließender Ringraum vorgesehen ist, der außenseits von einem Gehäuse des Ventils begrenzt wird und der über mindestens jeweils eine Anschluß- und eine Ablauföffnung mit der Umgebung des Ventils verbunden ist, **dadurch gekennzeichnet,** daß die mit dem abzudichtenden Fluid in Berührung kommende Dichtung, bis auf ihre an den Abdichtungsstellen temporär gegebenen Kontaktflächen mit dem Ventilteil einerseits und dem Gehäuse andererseits, aus den Räumen beiderseits der Kontaktflächen mit Reinigungsflüssigkeit bespült wird.

2. Verfahren nach Anspruch 1, **dadurch gekennzeichnet,** daß als Folge der Bewegung des Ventilteils die Bildung einer anderen Kontaktfläche der Dichtung an derselben Abdichtungsstelle oder dieselbe oder eine andere Kontaktfläche an einer anderen Abdichtungsstelle zugelassen wird.

3. Vorrichtung zur Durchführung des Verfahrens nach Anspruch 1 oder 2, **dadurch gekennzeichnet,** daß die Dichtung (70 bzw. 71) jeweils einen kreisförmigen Querschnitt aufweist, daß sie jeweils auf ihrer dem abzudichtenden Raum innerhalb des Ventilgehäuseteils (1 bzw. 2) zugewandten Seite von einer flüssigkeitsdurchlässigen Begrenzungswand (41) berandet wird, daß jede der Dichtungen (70, 71) in Richtung der Bewegung des Ventilteils (4) eine begrenzte Beweglichkeit aufweist, und daß den Dichtungen (70, 71) vom Ringraum (38) gleichzeitig oder nacheinander über die Anschlußöffnung (2a) Reinigungsflüssigkeit zuführbar ist, die über die Ablauföffnung (2a) abgeführt wird.

4. Vorrichtung nach Anspruch 3, **dadurch gekennzeichnet** daß zwischen den Ventilgehäuseteilen (1 und 2 bzw. 3) eine das Ventilteil (4) konzentrisch umschließende Scheibe (37) form-und/oder kraftschlüssig Aufnahme findet, die in den Ringraum (38) zwischen den Dichtungen (70, 71) hineingreift und mit einer im Bereich der Verbindungsebene der Ventilgehäuseteile (1 und 2 bzw. 3) angeordneten Trennwand (37a) einerseits in Verbindung mit dem Ventilgehäuseteil (1 bzw. 3) einen ersten Ringraum (44) und mit dem Ventilgehäuseteil (2 bzw. 1 ) andererseits einen zweiten Ringraum (45) bildet, wobei die Trennwand (37a) im Bereich des Ventilteils (4) einen Durchtrittsspalt (38a) für die Verbindung der Ringräume (44 und 45) miteinander freiläßt, daß eine Gehäusedichtung (12) außenseits der Scheibe (37) die Ventilgehäuseteile (1 und 2 bzw. 3) dichtend miteinander verbindet, und daß der erste Ringraum (44) wenigstens eine Anschlußöffnung (15) und der zweite Ringraum (45) wenigstens eine Ablauföffnung (2a) aufweist.

5. Vorrichtung nach Anspruch 4, **dadurch gekennzeichnet,** daß die Trennwand (37a) innerhalb der Scheibe (37) dergestalt asymmetrisch angeordnet ist, daß der Durchtrittsquerschnitt des zweiten Ringraumes (45) größer als jener des ersten Ringraumes (44) ist.

6. Vorrichtung nach einem der Ansprüche 4 oder 5, **dadurch gekennzeichnet,** daß die Ringräume (44, 45) über einen ersten Bypasskanal (37b) miteinander verbunden sind, der die Dichtung (12) tangiert.

7. Vorrichtung nach Anspruch 3, **dadurch gekennzeichnet,** daß die Begrenzungsflächen der Ventilgehäuseteile (1 und 2 bzw. 3) in der gemeinsamen Verbindungsebene liegen, in den Ringraum (38) bis nahe an die Dichtungen (70, 71) herangeführt und dort über die Gehäusedichtung (12) gegeneinander abgedichtet sind, daß ein Haltering (46) einerseits die Gehäusedichtung (12) innenseits stützt und andererseits zwischen sich und dem Ventilteil (4) den Durchtrittsspalt (38a) freiläßt, wodurch die durch den Haltering (46) gebildeten Teilräume des Ringraumes (38) miteinander verbunden sind, daß in letztere jeweils ein am Haltering (46) angeordneter, flüssigkeitsdurchlässiger erster bzw. zweiter Abstandhalter (46a bzw. 46b) hineinreicht, und daß die Teilräume des Ringraumes (38) innerhalb des jeweils zugeordneten Ventilgehäuseteils (1, 2, 3) mit der Anschlußöffnung (15) bzw. der Ablauföffnung (2a) verbunden sind.

8. Vorrichtung nach Anspruch 7, **dadurch gekennzeichnet,** daß der Haltering (46) zwischen sich und der Gehäusedichtung (12) einen zweiten Bypasskanal (47) bildet, der die Teilräume des Ringraumes (38) miteinander verbindet.

9. Vorrichtung nach einem der Ansprüche 7 oder 8, **dadurch gekennzeichnet,** daß der Haltering (46) eine axiale Erstreckung aufweist, die gleich oder kleiner ist als der lichte Abstand zwischen der Gehäusedichtung (12) und der Begrenzungswand (41).

10. Vorrichtung nach einem der Ansprüche 4 bis 9, **dadurch gekennzeichnet,** daß bei relativ großem Abstand der Dichtungen (70, 71) voneinander im mit der Anschlußöffnung (15) verbundenen Teil des Ringraumes (38) ein Umlenkteil (39, 40) vorgesehen ist, welches einerseits zwischen sich und dem Gehäuseverschlußteil (3) einen Kanal (39a) vom ersten Ringraum (44) zur Dichtung (70) bildet und andererseits zwischen sich und dem Ventilteil (4) eine Verbindung von der Dichtung (70) zum Durchtrittsspalt (38a) herstellt.

11. Vorrichtung nach Anspruch 10, **dadurch gekennzeichnet,** daß das Umlenkteil (39 bzw. 40) an der Trennwand (37a) oder dem Haltering (46) stoffschlüssig angeordnet oder angeformt ist.

12. Vorrichtung nach einem der Ansprüche 4 bis 11 , **dadurch gekennzeichnet,** daß der erste und/oder der zweite Ringraum (44 bzw. 45) über jeweils eine durch den zugeordneten Innenraum der Ventilgehäuseteile (1, 2) hindurchgeführte Leitung mit seiner Anschlußöffnung (15) bzw. seiner Ablauföffnung (2a) verbunden ist.

13. Vorrichtung nach einem der Ansprüche 3 bis 12, **dadurch gekennzeichnet,** daß die Dichtung (70 bzw. 71) derart in sich um 360° verdreht ausgebildet ist, daß alle denkbaren, die Torusachse der Dichtung umschließende Fasern gleichlang sind.

Fig. 1

Fig. 2

Fig. 3

Fig. 4

Fig. 5

Fig. 6

Fig. 7

Fig. 8